Europäisches Patentamt

European Patent Office

Office européen des brevets

(11) Publication number: **0 044 612**
**B1**

(12) **EUROPEAN PATENT SPECIFICATION**

(45) Date of publication of patent specification: **12.12.84**

(51) Int. Cl.³: **B 31 F 1/28**

(21) Application number: **81302565.7**

(22) Date of filing: **10.06.81**

(54) Single facer for corrugated board.

(30) Priority: **27.06.80 JP 87454/80**
**27.06.80 JP 87455/80**

(43) Date of publication of application:
**27.01.82 Bulletin 82/04**

(45) Publication of the grant of the patent:
**12.12.84 Bulletin 84/50**

(84) Designated Contracting States:
**CH DE FR GB IT LI NL**

(56) References cited:
**DE-A-2 154 295**
**DE-C- 833 362**
**DE-C- 891 951**
**FR-A- 526 822**
**US-A-3 057 220**
**US-A-3 080 771**
**US-A-3 604 087**
**US-A-3 884 087**
**US-A-4 186 162**

**MACHINE DESIGN, vol. 37, 16-09-1965**
**"Vibration in Geared System"**

(73) Proprietor: **MITSUBISHI JUKOGYO KABUSHIKI KAISHA**
**5-1, Marunouchi 2-chome Chiyoda-ku Tokyo (JP)**

(72) Inventor: **Takenaka, Hiroyuki Mitsubishi Jukogyo Kabushiki Kaisha 6-22, Kanon-Shin-machi 4-chome Nishi-ku Hiroshima-shi Hiroshima-ken (JP)**
Inventor: **Katayama, Keiichi Mitsubishi Jukogyo Kabushiki Kaisha 6-22, Kanon-Shin-machi 4-chome Nishi-ku Hiroshima-shi Hiroshima-ken (JP)**
Inventor: **Tokiyasu, Koichi Mitsubishi Jukogyo Kabushiki Kaisha 6-22, Kanon-Shin-machi 4-chome Nishi-ku Hiroshima-shi Hiroshima-ken (JP)**
Inventor: **Hirakawa, Tadashi Mitsubishi Jukogyo K.K. 5007, Itozaki-cho Mihara-shi Hiroshima-ken (JP)**
Inventor: **Sasashige, Hiroaki Mitsubishi Jukogyo K.K. 5007, Itozaki-cho Mihara-shi Hiroshima-ken (JP)**

(74) Representative: **Sommerville, John Henry et al SOMMERVILLE & RUSHTON 11 Holywell Hill St. Albans Hertfordshire, AL1 1EZ (GB)**

## Description

Efforts have recently been made to increase the operating speed of a corrugating line, or a line for manufacturing corrrugated board. One of the bottlenecks to the speedup of the corrugating line resides in the use of a single facer, which is a machine for manufacturing corrugated board having corrugations only on one surface thereof. There are a lot of technical problems yet to be solved for speeding up the operation of a single facer. One of the problems resides in the fact that the thermal conductivity of a roll and the magnitude of the noise made by the roll are inversely proportional to each other, whether the wall thickness of the roll may be increased or decreased. A single facer usually comprises an upper corrugating roll, a lower corrugating roll and a pressure roll, and a high pressure vapour is introduced into the rolls to heat a web of paper or a liner on the roll surfaces, whereby the corrugation of the paper and the adherence thereof to the liner are promoted. If such a single facer is operated at a higher speed, the web passes about the roll surfaces faster, and receives, therefore, only a smaller quantity of heat therefrom.

It is possible to improve the thermal conductivity of a roll if its wall thickness is reduced, but it has been found experimentally, that a roll having a smaller wall thickness makes a greater noise of a metallic nature during its operation. This is apparently due to an increase in the amplitude of elastic oscillation of the roll to a higher frequency level. A roll having a smaller wall thickness makes a particularly large noise when the single facer is operated at high speed.

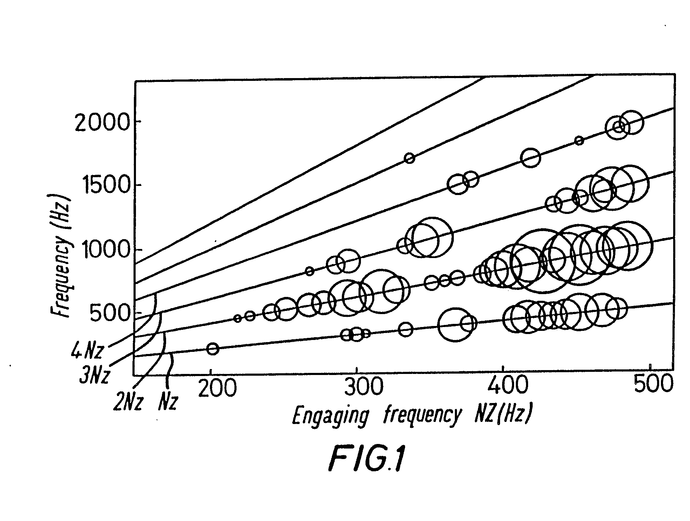

FIGURE 1 of the accompanying drawings is a Campbell's diagram showing the results of circle analysis of the noise actually made by a machine including a pressure roll having a diameter of 500 mm, a wall thickness of 25 mm and a length of 2,200 mm. It shows by way of circles the relation between the frequency at which a lower roll engages the pressure roll (hereinafter called the engaging frequency NZ) and the frequency of the noise. The size of a circle represents the magnitude of a noise.

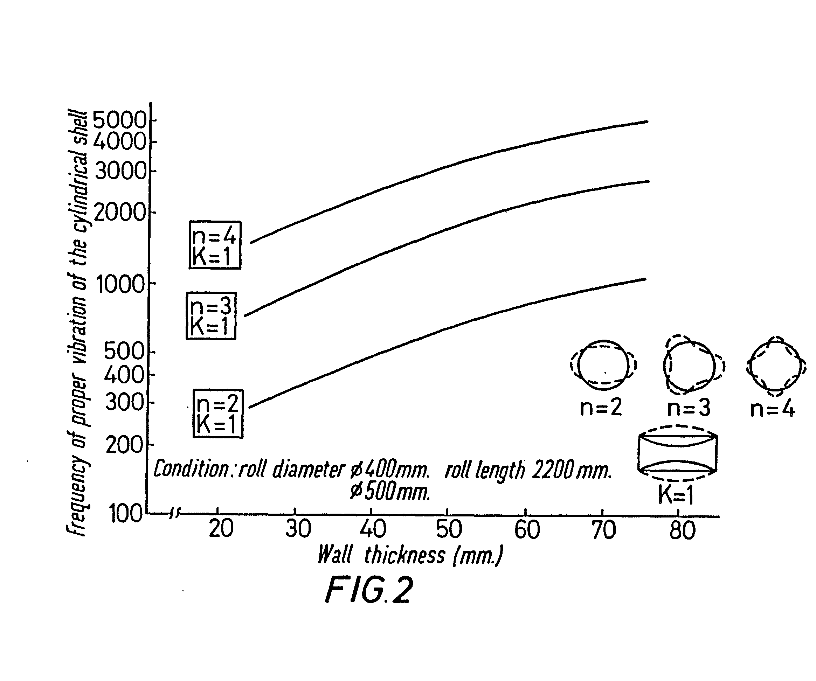

As can be seen from FIGURE 1, larger noises are produced at certain frequencies (i.e. about 300 Hz, 800 Hz and 1,600 Hz). These frequencies coincide with the frequencies of proper vibration (of the mode in which K = 1 and n = 2 to 4) of a cylindrical shell obtained from the vibration tests for the roll, as shown in FIGURE 2. The fact that the noise is metallic and harsh to the ear means that the proper vibration of the aforesaid mode occurs at NZ and the harmonics thereof. The proper vibration of the cylindrical shell has a lower frequency with a reduction in the wall thickness of the roll, and is likely to occur in the operating range. Thus, the attempt to improve the thermal conductivity of a roll by reducing its wall thickness, as proposed in the art, involves the problem of a greater noise as hereinbefore referred to.

It has hitherto been considered that the noise made by a single facer is mainly due to rigid oscillation. It has, however, been found that the noise increases due to elastic oscillation rather than due to rigid oscillation. This has been found as a result of the analysis of a metallic noise made to a greater extent by a pressure roll having its wall thickness reduced to eliminate the trouble of liner breakage to which the lowering of paper quality led. In order to restrict the noise caused by elastic oscillation, therefore, it has become necessary to study means for improving the dynamic rigidity of a roll (which means an increase of attenuation so that the roll may not easily be oscillated). The term 'rigid oscillation' means the vibration produced by the bending vibration load of a roll which is caused by an exciting load between rolls, as the bearings supporting the roll act as a spring providing a restoring force; whilst the term "elastic oscillation" means the vibration caused by the deformation of the roll *per se*.

It is known to provide vibration reducing means for rotating machine parts, see for example, DE—C—891951, US—A—3080,771 and DE—A—2154295.

In DE—C—891951 and US—A—3080,771 a disc-shaped rotating member is provided with a circular peripheral rim and, in each reference, the vibration reducing means are in the form of a spring which fits into a groove extending around the inner wall of the rim and which is maintained, under pressure, in contact with said inner wall.

In DE—A—2,154,295, vibration reducing means are proposed for a rotatable hollow roll in which the interior of the roll is filled with liquid.

An object of this invention is to provide an improved single facer of the kind comprising an upper roll, a lower roll and a pressure roll, each of the rolls being formed by a shell having an inner wall defining a hollow interior therein.

According to this invention such a single facer is characterised in that vibration reducing means are provided and located in the hollow interior of at least one of the rolls, in that said vibration reducing means comprise a multiplicity of cylindrical elements located within the roll, and maintained in contact with one another and with the inner wall of the shell of said roll so that the frictional resistance produced in the areas where the elements contact one another may restrict elastic deformation of the roll, whereby to reduce substantially noise caused by elastic oscillation of the roll.

A single facer embodying this invention is of high practical value.

In order that the invention may be readily understood, and further features made apparent, embodiments thereof will now be described with reference to the accompanying drawings in which:—

FIGURE 1, as discussed hereinbefore, is a Campbell's diagram showing the relation between the engaging frequency and the frequency in the normal kind of single facer.

FIGURE 2 is a diagram showing the relation between the wall thickness of a roll and the frequency of proper vibration of its cylindrical shell.

FIGURE 3 is a side elevation, in cross section, of the kind of single facer to which this invention is directed.

FIGURE 4 is a sectional elevation along the line IV—IV of the mutually contacting rolls of the single facer shown in FIGURE 3.

FIGURE 5 is a front elevation, partly in section, of the pressure roll of the single facer.

FIGURES 6 to 9 and 11 are cross-sectional views showing the interiors of rolls in single facers embodying this invention, and

FIGURE 10 is a sectional view, similar to FIGURE 4, of a single facer incorporating the embodiment described with reference to FIGURE 9.

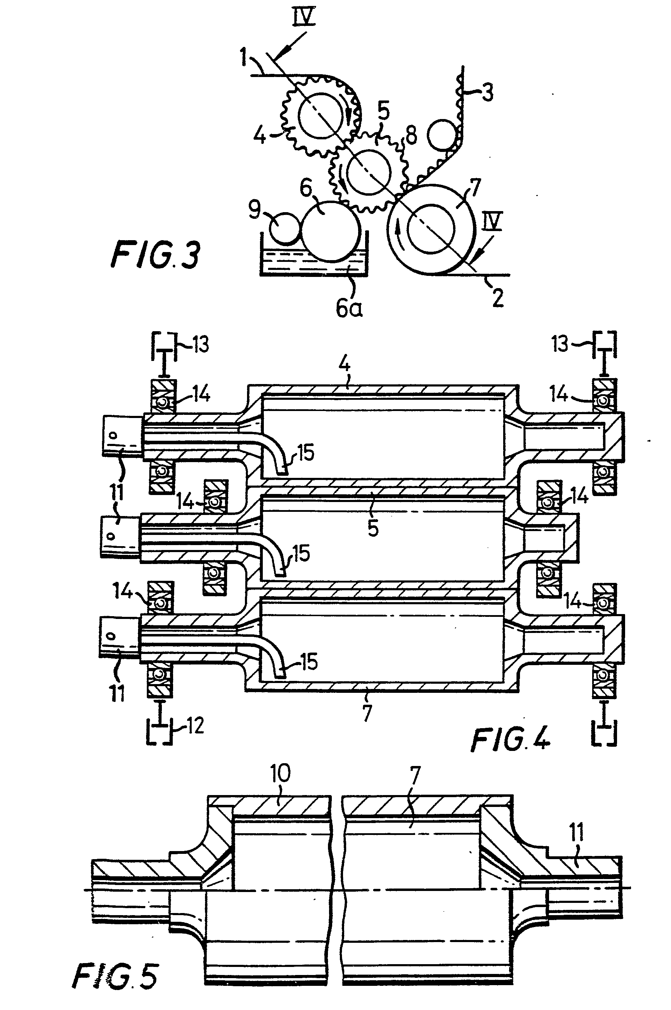

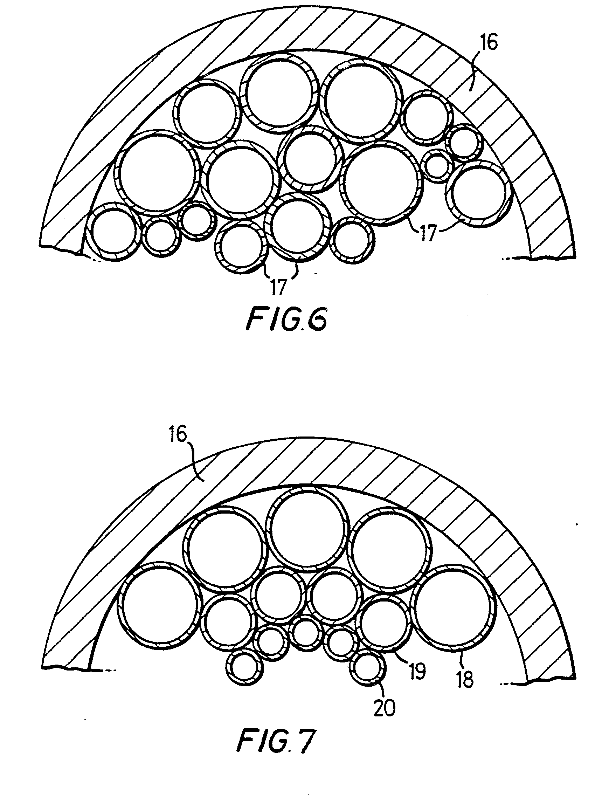

Referring now to FIGURES 3 and 4, the single facer to which this invention is directed is an apparatus which corrugates a web of paper 1 and applies a liner 2 thereto to thereby manufacture single-face corrugated board 3 continuously. The web 1 is fed to an upper corrugating roll 4 after it has been heated and moistened as it passes through a mill roll stand, a preheating roll and a moistener which are not shown. Then, the web 1 is fed between the upper corrugating roll 4 and a lower corrugating roll 5 to form corrugations 8. Each of the upper and lower corrugating rolls 4 and 5 has a hollow interior into which a high-pressure vapour is introduced, so that the heat of the vapour may be conducted through the shells of the rolls and maintain the outer surfaces of the rolls at a high temperature. A sufficient amount of heat is, therefore, supplied to facilitate the corrugation of the web and improve its strength. A pasting roll 6, which has an associated doctor roll 9, applies paste from a container 6a to the crests of the corrugations on the corrugated web and a liner 2, which has passed through a mill roll stand and a preheating roll (not shown) is fed to a pressure roll 7. The corrugated web is brought into contact with the liner 2 under pressure, whereby single-faced corrugated board 3 is formed. The pressure roll 7 has a hollow interior into which a high-pressure vapour is usually introduced to supply a sufficient quantity of heat to solidify the liquid paste and to impart an adhesive power thereto when the web 1 is bonded to the liner 2. The normal construction of the pressure roll 7 of the facer is shown in FIGURE 5 and includes a roll shell 10, and shaft ends 11; the upper and lower corrugating rolls 4 and 5 are essentially identical in construction to the pressure roll 7, except that each of them has an outer surface formed with a multiplicity of longitudinally extending flutes. However, in the arrangement shown particularly in FIGURE 4 the upper corrugating roll 4, lower corrugating roll 5 and pressure roll 7 are shown with rotary joints 11, cylinders 12 and 13 for pressure application, bearings 14, and siphons 15. In operation, a high-pressure vapour is introduced into the upper and lower corrugating rolls 4 and 5 through the rotary joints 11 for the corrugation of the web, and recovered through siphons 15. A vapour is likewise introduced into the pressure roll 7 for pasting the web to the liner, and recovered. The cylinder 13 applies pressure to the bearings on the upper corrugating roll 4 so that the pressure required for the corrugation of the web may be applied to the area of engagement between the upper and lower corrugating rolls 4 and 5. The cylinder 12 applies pressure to the bearings on the pressure roll to thereby supply the pressure required for the bonding of the web to the liner.

Referring now to FIGURE 6 of the drawings, in one embodiment of this invention particularly suitable for the arrangement shown in FIGURE 4, the numeral 16 designates an upper corrugating roll, lower corrugating roll, or a pressure roll, in which are located vibration reducing means comprising a multiplicity of pipes 17 having different diameters and wall thicknesses located within the roll and arranged so as to be in contact with one another along their lengths. The pipes 17 are also arranged so as to be in contact with the inner wall of the roll shell. The pipes 17 are arranged to maintain their contact with the inner wall of the roll shell at an appropriate pressure, and be sufficiently rigid in order to exhibit a frictional damping action against elastic deformation of the roll.

Referring now to FIGURE 7 in another embodiment of this invention, a multiplicity of pipes 18, 19 and 20 having large, medium and small diameters, respectively, are located, in contact with one another, within the roll 16. This embodiment provides an arrangement for the pipes which is effective in having the pipes 18 to 20 contact one another and the roll shell at as many points as possible. Thus, the large pipes 18 have a diameter which permits them to be positioned in good order without any clearance therebetween along the entire inner periphery of the roll 16. The pipes 19 have a diameter which is smaller than that of the pipes 18, and which permits the pipes 19 to be positioned in good order so that each of the pipes 19 may be in contact with two adjacent large pipes 18 and two other pipes 19 on either side of each pipe 19. The small pipes 20 are also positioned in good order relative to the medium-sized pipes 19 in such a fashion that the pipes 19 are positioned relative to the pipes 18. The number $N_1$ of the pipes 18 in the first row is equal to the number $N_2$ of the pipes 19 in the second row, and the number of the pipes 20 in the third row, and so on.

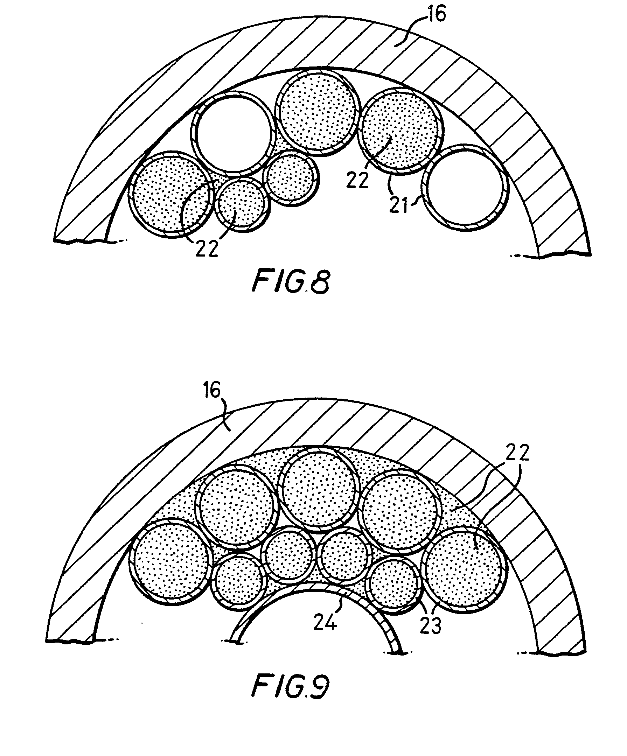

Referring now to FIGURE 8 in a further embodiment of this invention, the vibration reducing means may be yet another multiplicity of pipes 21 positioned in the roll 16 which pipes, however, are filled wholly or partly with a damping material 22. Likewise, the clearance spaces around the pipes may be wholly or partly filled with a damping material. The damping material may be a powdered or granular material such as sand, concrete, or a liquid such as an oil, or the like, and is intended for increasing the damping effect of the pipes.

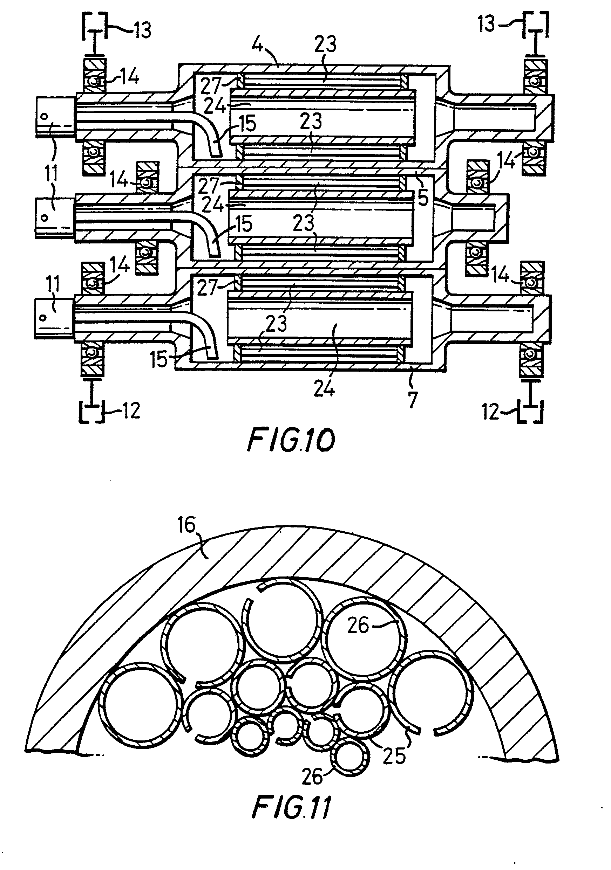

In a further embodiment shown in FIGURE 9, a multiplicity of pipes 23 may be located within the roll 16, with their interiors and the clearance spaces around the pipes completely filled with a damping material as hereinbefore described with reference to the embodiment of FIGURE 8 to provide a frictional damping action and, additionally, a larger diameter pipe 24 may be disposed preferably concentrically within the roll 16 to provide a passage for a hot vapour. It will be appreciated that any of the pipes 23 may provide a passage for a vapour if their opposite ends are open, but a separate vapour passage is required as hereinbefore described, if the pipes 23 are completely blocked by the fillings of damping material. It is preferable to position the larger diameter pipe 24 concentrically within the roll 16, and to pack the annular space between the roll 16 and pipe 24 with the pipes 23. In this way, the pipe 24 does not only provide a vapour passage, but can also effectively create a frictional damping effect in the area where it contacts the pipes 23. Thus, the manner in which the pipes 23 are arranged around the pipes 24 in respective rolls 4, 5 and 7 is shown in FIGURE 10. From this figure it can be seen that the pipes 23 in each roll are fixed in position by end plates 27. The end plates 27 may be provided with slits, holes, or other vent openings if it is desired to introduce a vapour into the pipes 23.

FIGURE 11 shows yet another embodiment of this invention in which the roll 16 is filled with a plurality of pipes 25 each having a longitudinal slit, and a plurality of pipes 26 having no such slit. The slitted pipes 25 are provided to ensure contact of the pipes with one another at as many points as possible, easy positioning of the pipes in the roll, and maintenance of the pipes in contact with one another and the roll at an appropriate pressure. All of the pipes may be slitted if required.

Although in all of the embodiments as hereinabove described with reference to FIGURES 6 to 11, the pipes provided in the roll 16 have a cross section which is circular, or circular and slitted, it would be equally possible to employ pipes having a different cross section which is, for example, oval or polygonal. Moreover, it is possible to use solid bars, instead of pipes.

Although it has already been stated that the pipes positioned in the roll may be provided with slits or like openings longitudinally of their walls, they can also be provided with holes which improve the thermal conductivity of the pipes. In this connection, it is possible to make each pipe by bending a punched metal sheet, or the like. Although FIGURE 10 shows the pipes 23 concentrated in one central position relative to the length of the roll, it is equally possible to position them in two or more regions if required. Moreover, the pipes do not necessarily need to be straight, but can be of bent form. Furthermore, it is possible to employ a combination of pipes and solid bars. The solid bars may be of a metal, or a non-metallic material such as concrete.

In the single facer of this invention constructed in accordance with any one of the various embodiments, as hereinabove described, the pipes all serve as vibration reducing or damping means, and the frictional resistance thus created can very effectively damp the vibration of the rolls, particularly their elastic oscillations, during the operation of the single facer. Thus, a single facer constructed in accordance with this invention makes it possible to achieve noise reduction, and avoid production of any metallic noise, since a high damping effect for vibration can be obtained. Thus, a roll having a relatively small wall thickness compared with normal constructions, for providing an improved degree of thermal conductivity can be used.

**Claims**

1. A single facer for corrugated board of the kind comprising an upper roll (4) and lower roll (5) and a pressure roll (7), each of the rolls being formed by a shell (10, 16) having an inner wall defining a hollow interior therein, characterised in that vibration reducing means (17 to 23) are provided and located in the hollow interior of at least one of the rolls, in that said vibration reducing means comprise a multiplicity of cylindrical elements (17; 18 to 20; 21; 23; 25, 26) located within the roll, and maintained in contact with one another and with the inner wall of the shell of said roll, so that the frictional resistance produced in the areas where the elements contact one another restricts elastic deformation of the roll, whereby to reduce substantially noise caused by elastic oscillation of the roll.

2. A single facer according to Claim 1, characterized in that the cylindrical element (17; 18 to 20; 21; 23; 25, 26) are of circular cross-section and are of different diameters, as appropriate, to fill the hollow space within the roll (4; 5; 7).

3. A single facer according to Claim 1, characterized in that said vibration reducing means (17 to 23) contact said inner wall of the roll (4; 5; 7) along substantially its complete length.

**Revendications**

1. Appareil de fabrication de carton ondulé simple face, du type comprenant un rouleau supérieur (4), un rouleau inférieur (5) et un rouleau presseur (7), chacun de ces rouleaux étant formé d'une enveloppe (10, 16) comportant une paroi interne qui définit une cavité interne, caractérisé en ce qu'il comporte des moyens de réduction des vibrations (17 à 23) qui sont logés dans la cavité interne d'au moins l'un des rouleaux, en ce que lesdits moyens de réduction des vibrations comprennent plusieurs éléments cylindriques (17; 18 à 20; 21; 23; 25, 26) logés à l'intérieur du rouleau et maintenus en contact les uns avec les autres et avec la paroi interne de l'enveloppe dudit rouleau, de telle manière que la résistance par friction, produite sur les surfaces de contact entre les éléments, limite la déformation élastique du rouleau pour réduire sensiblement le bruit provoqué par une oscillation élastique du rouleau.

2. Appareil selon la revendication 1, caractérisé en ce que lesdits éléments cylindriques (17; 18 à 20; 21; 23; 25, 26) sont de section circulaire et de diamètres différents, de manière à remplir la cavité interne du rouleau (4; 5; 7).

3. Appareil selon la revendication 1, caractérisé en ce que lesdits moyens de réduction des vibrations (17 à 23) sont en contact avec ladite paroi interne du rouleau (4; 5; 7) sensiblement sur la totalité de sa longueur.

**Patentansprüche**

1. Maschine zum Herstellen einseitig gedeckter Wellpappe mit einer Oberwalze (4), einer Unterwalze (5) und einer Preßwalze (7), deren jede aus einem Mantel (10, 16) mit einer inneren Wand gebildet ist, die einen Hohlraum umschließt, dadurch gekennzeichnet, daß im hohlen Innenraum wenigstens einer der Walzen Vibrationsdämpfungsmittel (17—23) vorgesehen ist, daß die Vibrationsdämpfungsmittel eine Mehrzahl von zylindrischen Elementen (17; 18—20; 21; 23; 25, 26) innerhalb der Walze aufweisen und sowohl miteinander als auch mit der Innenwand des Mantels der genannten Walze in Verbindung stehen, so daß der Reibwiderstand, der in jenen Bereichen erzeugt wird, in welchem die Elemente einander berühren, die elastische Verformung der Walze begrenzt, wobei das durch die elastische Schwingung der Walze erzeugte Geräusch wesentlich verringert wird.

2. Maschine nach Anspruch 1, dadurch gekennzeichnet, daß die zylindrischen Elemente (17; 18—20; 21; 23; 25, 26) je nach Bedarf von kreisförmigen Querschnitt und von unterschiedlichen Durchmessern sind, um den Hohlraum innerhalb der Walze (4, 5; 7) auszufüllen.

3. Maschine nach Anspruch 1, dadurch gekennzeichnet, daß die vibrationsverringernden Mittel (17—23) an der Innenwand der Walze (4; 5; 7) entlang im wesentlichen deren gesamter Länge anliegen.

FIG.1

FIG.2

FIG.3

FIG.4

FIG.5

FIG.6

FIG.7

FIG.8

FIG.9

5

FIG.10

FIG.11